# EUROPÄISCHE PATENTSCHRIFT

(11) **EP 2 519 427 B1**
(45) Veröffentlichungstag und Bekanntmachung des Hinweises auf die Patenterteilung: **09.10.2013**
(21) Anmeldenummer: 10778971.1
(22) Anmeldetag: 04.11.2010
(51) Int. Cl.: B60S 1/08

(54) **SCHEIBENWISCHVORRICHTUNG**
WINDSCREEN WIPER DEVICE
DISPOSITIF D'ESSUIE-GLACE

(30) Priorität: 30.12.2009 DE 102009055399
(43) Veröffentlichungstag der Anmeldung: 07.11.2012
(73) Patentinhaber: Robert Bosch GmbH, 70442 Stuttgart (DE)
(72) Erfinder: ZIMMER, Joachim, Changsha Hunan 410100 (CN)
(86) Internationale Anmeldenummer: PCT/EP2010/066807
(87) Internationale Veröffentlichungsnummer: WO 2011/079990

(56) Entgegenhaltungen:
- DE-A1- 10 144 985
- US-A1- 2004 144 911

## Beschreibung

### Stand der Technik

Die vorliegende Erfindung betrifft eine Scheibenwischvorrichtung, insbesondere für ein Kraftfahrzeug mit mindestens einer Antriebseinrichtung, die über eine Steuereinrichtung steuerbar ist, wobei die Steuereinrichtung einen Leistungs- und Drehmomentbedarf der Scheibenwischvorrichtung in Abhängigkeit von wenigstens einem oder mehreren den Leistungs- und Drehmomentbedarf der Antriebseinrichtung beeinflussenden Parameter steuert.

Die Festlegung der Baugröße eines Wischermotors erfolgt heute unter Berücksichtigung eines "Wurstkäse Szenarios". Dazu werden sämtliche extreme Situationen, der eine Scheibenwischvorrichtung ausgesetzt werden könnten, wie beispielsweise abtrocknender Windschutzscheibe, höchste Wischarmauflagekraft an der Windschutzscheibe und höchste Fahrgeschwindigkeit als Annahme getroffen, um den Leistungs- und Drehmomentbedarf auch bei Zusammentreffen der ungünstigsten Umgebungsbedingungen zu garantieren. Die Folge sind extrem drehmomentstarke Motoren, auf deren Einzugsdrehmoment die Dimensionierung der mechanischen Bauteile des Wischersystems bezüglich Festigkeit abgestimmt werden müssen.

Aufgrund der daraus resultierenden großen Dimensionierung eines Wischermotors der Scheibenwischvorrichtung und auch der äußeren Abmessungen war es Zielt der Anmelderin, eine genaue Adaption des Motordrehmoments unter Berücksichtigung von Umgebungsbedingungen bzw. den im Fahrzeug vorliegenden Signalen vorzunehmen, aus denen der zu jedem Zeitpunkt benötigte Leistungs- und Drehmomentbedarf des Wischersystems abgeleitet werden kann. Eine solche Adaption des Motordrehmoments unter Berücksichtigung einiger Umgebungsbedingungen schlägt beispielsweise Dokument DE 10 2008 001 816 A1 vor. Dieses Dokument stellt eine Scheibenwischvorrichtung bereit, die eine oder mehrere über eine Steuereinrichtung steuerbare Antriebseinrichtung aufweist. Die Steuereinrichtung ist dabei derart ausgebildet, dass sie den Leistungsbedarf der Scheibenwischvorrichtung in Abhängigkeit von wenigstens einem oder mehreren Parametern steuert, die einen Einfluss auf den Leistungsbedarf der jeweiligen Antriebseinrichtung der Scheibenwischvorrichtung haben. Die Parameter umfassen dabei mindestens die Fahrgeschwindigkeit und/oder den Scheibenzustand.

Aus dem Stand der Technik ist gemäß dem Dokument DE 101 44 985 ferner ein Verfahren zur Steuerung einer Scheibenwischvorrichtung bekannt, in dem die Steuereinrichtung zum Steuern einer Antriebseinrichtung der Scheibenwischvorrichtung das abgebbare Drehmoment der Antriebseinrichtung in Abhängigkeit von dem Übersetzungsverhältnis des Scheibenwischergestänges bzw. dessen Drehwinkels bestimmt. Der Drehwinkelbereich einer Motorkurbel der Scheibenwischvorrichtung ist hierbei in mehrere Winkelbereiche aufgeteilt, denen jeweils ein eigenes maximales Drehmoment zugeordnet ist. Die Steuereinrichtung fragt zur Bestimmung des benötigten Drehmoments zunächst die entsprechenden Parameter von diversen Einrichtungen des Kraftfahrzeuges, wie beispielsweise Regensensor, Geschwindigkeitsmesser und ähnlichem ab und ordnet diese entsprechenden Kennzahlen zu, um dementsprechend auf Umgebungsbedingungen zu reagieren. Eine vorausschauende Einstellung des benötigten Drehmomentes des Wischersystems ist unter diesen Bedingungen jedoch nicht möglich, was dazu führen kann, dass die Scheibenwischvorrichtung relativ träge auf sich ändernde Funktionsparameter insbesondere der Umgebungsbedingungen reagiert.

Eine gattungsgemäße Scheibenwischvorrichtung sowie ein gattungsgemäßes Verfahren zur elektronisch gesteuerten Begrenzung eines Leistungs- und Drehmoments einer Scheibenwischvorrichtung ist aus dem Dokument US-A-2004/0144911 bekannt.

Es ist daher Aufgabe der vorliegenden Erfindung, eine Scheibenwischvorrichtung bereitzu-stellen, die ein flexibleres Reagieren auf Umgebungsparameter zulässt.

### Offenbarung der Erfindung

Diese Aufgabe wird erfindungsgemäß durch die Merkmale der Ansprüche 1 und 10 gelöst. Eine Position des Kraftfahrzeuges kann beispielsweise mit Hilfe von Satellitensignalen, beispielsweise einem GPS, erfolgen. Mit Festlegung der aktuellen Position ist es möglich, Informationen bezüglich der herrschenden Witterungsbedingungen wie beispielsweise Niederschlag oder aktuelle Temperatur abzufragen.

Eine vorteilhafte Ausführungsform der vorliegenden Erfindung sieht vor, zur Bestimmung der aktuellen Position der Kraftfahrzeuges oder aber auch quasi vorausschauend eine zukünftige Position des Kraftfahrzeuges beispielsweise zur Bestimmung der dort herrschenden Umgebungsbedingungen die entsprechenden Parameter der Fahrzeugposition mit einem in dem Kraftfahrzeug vorgesehenen Navigationssystem abzufragen. Die Steuerungseinrichtung kann dazu mit dem Navigationssystem gekoppelt sein und eine Kennfeldsteuerung unter Berücksichtigung auch zukünftiger Umgebungsbedingungen frühzeitig veranlassen und kurzfristig modifizieren.

Eine Ausführungsform der vorliegenden Erfindung sieht vor, dass in einem durch die aufzunehmenden Parameter gebildeten Kennfelder die maximal zulässige Fahrgeschwindigkeit Berücksichtigung findet. In vielen Ländern ist eine landesspezifische Maximalgeschwindigkeit auf Autobahnen und Landstraßen vorgeschrieben. Durch die Zuordnung der landesspezifischen Maximalgeschwindigkeit kann auch hier ein Anhaltspunkt für das maximal benötigte Drehmoment der Antriebseinrichtung der Scheibenwischvorrichtung gegeben sein.

Um eine weitere Möglichkeit bereitzustellen, die eine Kennfeldsteuerung unter Einbeziehung der Fahrzeuggeschwindigkeit zulässt, kann die Steuereinrichtung mit einem in dem Kraftfahrzeug vorgesehenen Tempomat gekoppelt sein. Sollte ein Fahrer des Kraftfahrzeuges eine entsprechende Geschwindigkeit in den Tempomat eingegeben haben, so lässt sich auch aus dieser Geschwindigkeit auf den Leistungs- und Drehmomentbedarf der Scheibenwischvorrichtung rückschließen und eine Kennfeldsteuerung unter Berücksichtigung zukünftiger Geschwindigkeitsparameter frühzeitig einleiten.

Eine weitere Möglichkeit, die Fahrzeuggeschwindigkeit vorausschauend bei der Kennfeldsteuerung berücksichtigen zu können, ist dadurch gegeben, dass die Steuereinrichtung mit einem an dem Fahrzeug vorgesehenen Kamerasystem gekoppelt ist. Das Kamerasystem kann abhängig von der Fahrzeugposition örtliche Geschwindigkeitsbegrenzungen aktuell bestimmen, um diese Geschwindigkeitsbegrenzungen zur Übermittlung der Parameter zur Fahrgeschwindigkeit einzusetzen. Natürlich ist es auch möglich, diese Informationen von einem Navigationssystem des Fahrzeuges abzufragen, sofern dieses Informationen zu Geschwindigkeitsbeschränkungen bereitstellen kann

Um festzustellen, wie groß der Widerstand ist, der den Wischerblättern auf einer Frontscheibe des Fahrzeuges entgegentritt, was gleichzeitig mit einer Vergrößerung des Leistungs- und Drehmomentbedarfs der Antriebseinrichtung einhergeht, kann in einem Ausführungsbeispiel der vorliegenden Erfindung der Scheibenzustand des Fahrzeuges mittels mindestens einem Regensensor Berücksichtigung in der Kennfeldsteuerung zur Drehzahlbestimmung der Antriebseinrichtung der Scheibenwischvorrichtung finden.

In einer bevorzugten Ausführungsform der Erfindung sind als Parameter, die einen Einfluss auf den Leistungsbedarf der jeweiligen Antriebseinrichtung der Scheibenwischvorrichtung haben, der Wischhebelwinkel, die Wischbewegungsrichtung, d. h. eine Aufwärts- bzw. eine Abwärtswischbewegung der Wischhebel auf der Frontscheibe, ein Übersetzungsverhältnis eines Wischerhebelgestänges der Scheibenwischvorrichtung und/oder eine Wischergeschwindigkeit bestimmbar. Hierdurch kann die Leistungszuweisung an die Antriebseinrichtung weiter verfeinert bzw. differenziert werden.

Das Übersetzungsverhältnis kann bei Wischermotoren mit einem Wischerhebelgestänge zusätzlich berücksichtigt werden, während es bei Wischermotoren mit einem Wischermotordirektantrieb (WDA) entfällt.

Die Kombination der Bestimmung der Fahrgeschwindigkeit und des Scheibenzustandes bereits einige Sekunden im Voraus ermöglicht, dass die Leistung der jeweiligen Antriebseinrichtung in Abhängigkeit von einer vorbestimmten Fahrgeschwindigkeit und einer Wischbewegung, d. h. einer Wischeraufwärtsbewegung und/oder Wischerabwärtsbewegung, flexibel und vorausschauend bestimmt und eingestellt werde kann. Hierzu können ein oder mehrere Kennfelder beispielsweise in einer Speichereinrichtung der Steuereinrichtung hinterlegt sein und über die Steuereinrichtung abgerufen werden. Die Steuereinrichtung kann dabei Teil der Motorsteuerung sein oder Teil der Scheibenwischvorrichtung, beispielsweise mit der Motorsteuerung gekoppelt sein.

In einem Ausführungsbeispiel des erfindungsgemäßen Verfahrens werden zur Kennfeldsteuerung als Parameter auch ein Wischhebelwinkel, eine Wischbewegungsrichtung, ein Übersetzungsverhältnis eines Wischerhebelgestänges der Scheibenwischvorrichtung, eine Wischergeschwindigkeit, eine Übersetzung eines Antriebsgestänges, eine Außentemperatur und/oder ein Scheibenzustand berücksichtigt.

Hinsichtlich weiterer vorteilhafter Ausführungsformen der vorliegenden Erfindung wird auf die Unteransprüche sowie im Folgenden näher erläuterte Zeichnung verwiesen.

### Kurze Beschreibung der Zeichnung

Es zeigen:
- Figur 1:: eine schematische Darstellung eines Diagramms zur Steuerung einer Antriebseinrichtung einer Scheibenwischvorrichtung gemäß der Erfindung;
- Figur 2:: ein Diagramm, in welchem der Verlauf der Widerstandskraft gezeigt ist in Abhängigkeit von Fahrzeuggeschwindigkeit; und
- Figur 3:: ein Diagramm, in welchem ein weiteres Beispiel für eine Leistungsreduzierung der Antriebseinrichtung in Abhängigkeit von der Fahrzeuggeschwindigkeit gezeigt ist.

### Ausführungsbeispiel

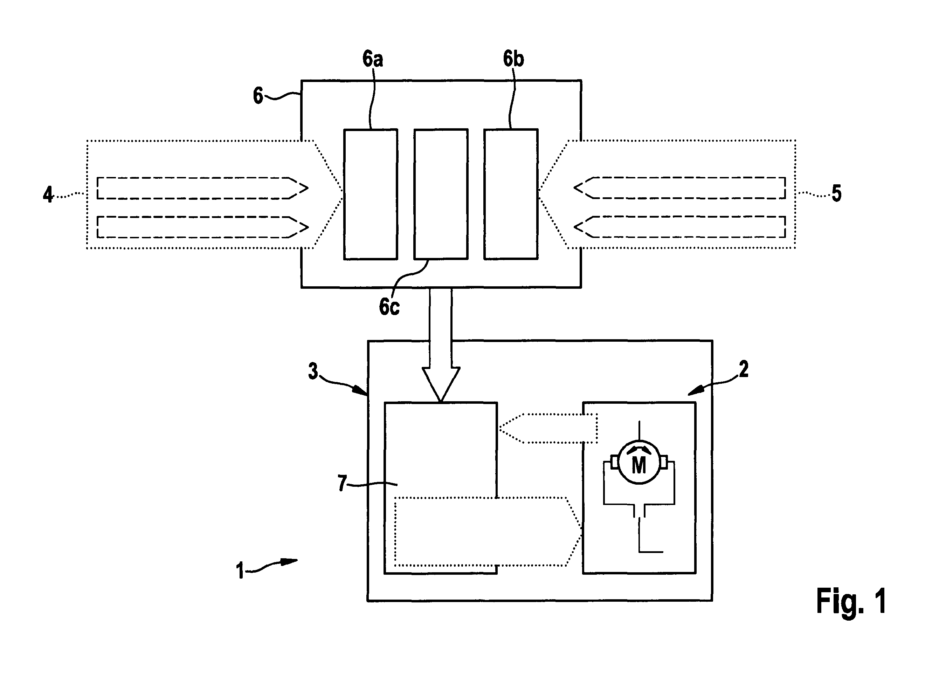

Die Figur 1 zeigt eine schematische Darstellung eines Ablaufdiagramms für die Signalverarbeitung von Positions- und Geschwindigkeitsbegrenzungsinformationen und eine anschließende Berechnung und Anpassung der Leistung bzw. deren Motordrehmomentes in einer erfindungsgemäßen Scheibenwischvorrichtung 1.

Die erfindungsgemäße Scheibenwischvorrichtung 1 für ein Kraftfahrzeug weist dazu eine Antriebseinrichtung 2 auf, die über eine Steuereinrichtung 3 steuerbar ist, wobei die Steuereinrichtung 3 einem Leistungs- und Drehmomentbedarf der Scheibenwischvorrichtung 1 in Abhängigkeit von mehreren den Leistungs- und Drehmomentbedarf der Antriebseinrichtung 2 beeinflussenden Parametern steuert. Zwei der Parameter sind hier durch die Ortsbestimmung 4 und Geschwindigkeitsbegrenzung (Speedlimit) 5 gekennzeichnet und berücksichtigen somit die aktuelle Position des Kraftfahrzeuges sowie örtlich zugeschriebene Geschwindigkeitsbegrenzungen. Einem Bordnetz 6 sind in dem gezeigten Ausführungsbeispiel Signale bezüglich Position 6a und Geschwindigkeit 6b zu entnehmen. Unter sonstigen Signalen können solche umgebungsbedingten Signale wie in der Umgebung herrschende Temperatur, Luftfeuchtigkeit, Regen oder Schneewahrscheinlichkeit und ähnliches aufgenommen sein.

Der Informationsfluss bei Nutzung der Signale bezüglich Ortsbestimmung 4 und Geschwindigkeitsbegrenzung 5 werden aus einem Fahrzeugbordnetz 6 an die in der Antriebseinrichtung 2 der Scheibenwischvorrichtung 1 integrierte Steuereinheit 3 bzw. Steuerelektronik 7 weitergeleitet und darin verarbeitet, um den zugehörigen Leistungsbedarf zu berechnen.

In dem Diagramm gemäß Figur 1 ist dabei die Steuerung der Antriebseinrichtung 2 der Scheibenwischvorrichtung 1 gemäß einer ersten Ausführungsform der Erfindung gezeigt. Dazu werdend zunächst die Parameter von Umgebungsbedingungen und der maximal zulässigen Fahrgeschwindigkeit in Abhängigkeit der Position des Fahrzeugs bestimmt. Gleichzeitig werden die hier über ein GPS-Signal mittels eines Navigationsgerätes bestimmten Positionsdaten mit Wettervorhersagedaten gekoppelt, so dass bereits bevor das Fahrzeug die Position erreicht im Voraus die zu erwartenden Umgebungsbedingungen, beispielsweise aufgrund von Wettervorhersagen, die Regen, Schnee und Temperaturen sehr genau abgefragt, und entsprechend auf die Kennfadensteuerung zurückgegriffen werden kann.

Die örtlichen Geschwindigkeitsbegrenzungen werden zum einen mittels eines an der Fahrzeugkarosserie angebrachten Kamerasystems ermittelt, welches in der Lage ist, am Fahrbahnrand befindliche Geschwindigkeitsbegrenzungsschilder zu detektieren und damit die herrschende Höchstgeschwindigkeit zu ermitteln. Dazu ist die Steuereinrichtung 4 mit dem Kamerasystem gekoppelt.

Eine weitere Möglichkeit der vorzeitigen Geschwindigkeitserfassung bietet eine Kopplung an der Steuereinrichtung mit einem in dem Kraftfahrzeug eingebauten Tempomat, welcher erlaubt, die durch den Nutzer eingestellte maximal zu erwartende Geschwindigkeit so lange abzuschätzen, bis der Nutzer des Fahrzeuges dem Tempomat ausschaltet oder die eingestellte Höchstgeschwindigkeit nach oben hin anpasst oder absenkt.

Die aus dem Baunetz 6 hervorgebrachten Signale werden dann an die Steuereinrichtung 2 weitergeleitet. In der Steuereinrichtung 3 ist die Steuerelektronik 7 angeordnet, welche Informationen von der Antriebseinrichtung 2 bezüglich der auf die Scheibenwischvorrichtung 1 wirkenden Lasten, insbesondere das derzeit eingestellte Leistungs- bzw. Drehmoment erhält. Dieser Wert des Drehmomentes wird mit einem aus der Kennzahlensteuerung ermittelten Wert verglichen und bei Abweichung der beiden Werte erfolgt eine Adaption des Drehmomentes, d.h. das Drehmoment wird entsprechend des Ergebnisses der Kennzahlensteuerung angehoben bzw. abgesenkt.

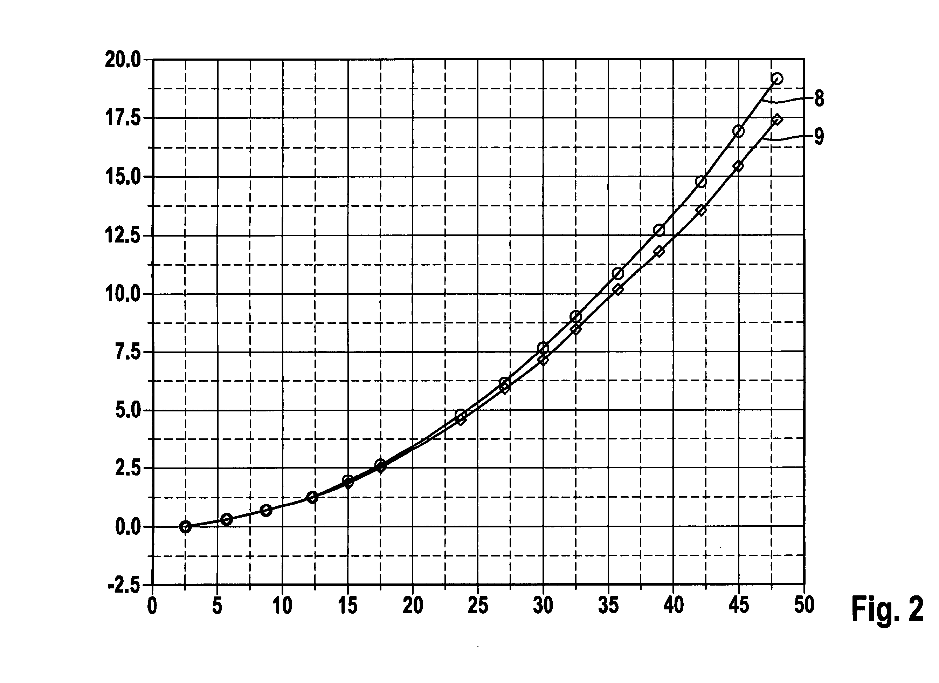

Die Figur 2 zeigt einen Verlauf einer Windwiderstandskraft über die Fahrgeschwindigkeit von 0 km/h bis 180 km/h. Dabei sind zwei Verläufe dargestellt, einmal für die Fahrerseite 8 und einmal für die Beifahrerseite 9. Aus dem Diagramm kann entnommen werden, dass mit zunehmender Anströmgeschwindigkeit, mit der ein Fahrzeug angeströmt wird, die Windwiderstandskraft deutlich ansteigt. Je schneller ein Fahrzeug also fährt, desto höher ist die Anströmgeschwindigkeit sowie die Windwiderstandskraft, die auf das Wischersystem einwirkt und dem die Scheibenwischvorrichtung 1 beispielsweise beim Abwärtswischen entgegen wirken muß.

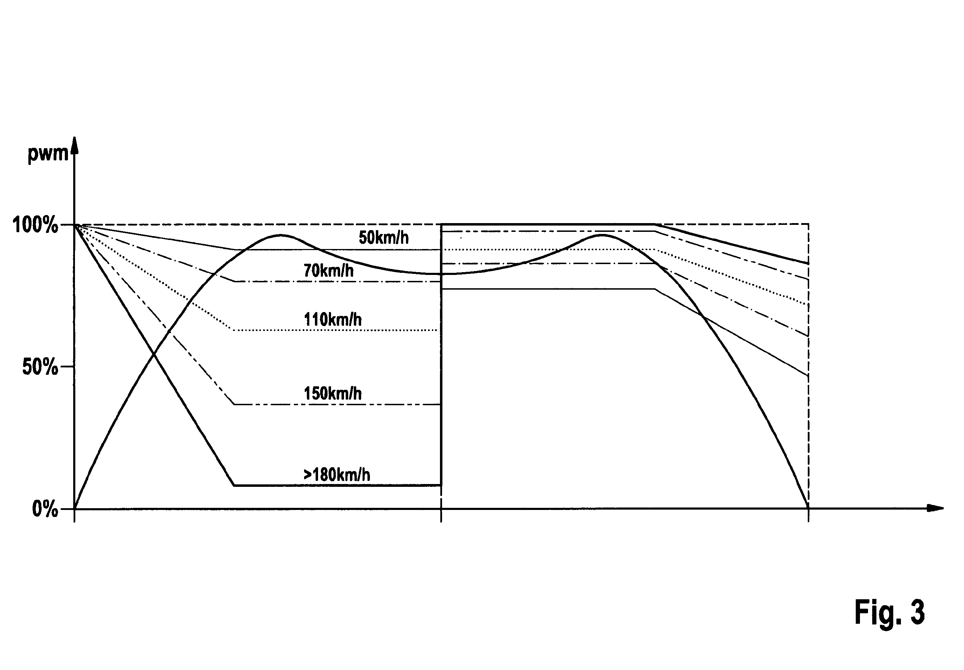

Der Unterschied des Leistungsbedarfes der Scheibenwischvorrichtung 1 bei einer Auf- bzw. Abwärtsbewegung eines Wischhebels der Scheibenwischvorrichtung 1 für einen Wischerdirektantrieb WDA ist in Figur 3 gezeigt. Hier dargestellt ist ein Diagramm mit Kennlinien für eine Leistungs- und Drehmomentreduzierung der Antriebseinrichtung in Abhängigkeit von der Fahrzeuggeschwindigkeit für eine Aufwärts- und Abwärtsbewegung der Wischereinrichtung gezeigt. Zusätzlich ist eine Kurve für die Luftwiderstandskraft eingezeichnet. Daraus ergibt sich, dass bei einem Wischhebelwinkel von 0-45° die Luftwiderstandskraft allmählich zunimmt und bei einer Wischeraufwärtsbewegung den Wischerhebel zusätzlich unterstützt. Entsprechend wird auch der Leistungsbedarf beim Aufwärtswischen wie in Figur 3 gezeigt, beispielsweise in einem Bereich von 0-45° erst langsam von 100% auf einen bestimmten maximalen Wert reduziert. Für einen Bereich ab beispielsweise 30° wird dagegen der Leistungsbedarf gemäß der Figur 3 auf einen vorbestimmten Endwert abgesenkt.

## Patentansprüche

1. Scheibenwischvorrichtung (1), insbesondere für ein Kraftfahrzeug mit mindestens einer Antriebseinrichtung (2), die über eine Steuereinrichtung (3) steuerbar ist, wobei die Steuereinrichtung (3) einen Leistungs- und Drehmomentbedarf der Scheibenwischvorrichtung (1) in Abhängigkeit von wenigstens einem oder mehreren den Leistungs- und Drehmomentbedarf der Antriebseinrichtung (2) beeinflussenden Parametern steuert, **dadurch gekennzeichnet, dass** die Steuereinrichtung (3) zur Leistungsund Drehmomentreduzierung zumindest Parameter zur Bestimmung der aktuellen Position (6a) und der Geschwindigkeit (6b) des Kraftfahrzeuges umfasst.

2. Scheibenwischvorrichtung (1) nach Anspruch 1, **dadurch gekennzeichnet, dass** die Bestimmung der Position mit Hilfe von Satellitensignalen, insbesondere eines GPS erfolgt.

3. Scheibenwischvorrichtung (1) nach Anspruch 1 oder 2, **dadurch gekennzeichnet, dass** die Steuereinrichtung (3) zur Bestimmung der Parameter der Fahrzeugposition mit einem in dem Kraftfahrzeug vorgesehenen GPS, insbesondere einem Navigationssystem gekoppelt ist.

4. Scheibenwischvorrichtung (1) nach einem der vorhergehenden Ansprüche, **dadurch gekennzeichnet, dass** die Parameter zumindest die maximal zulässige Fahrgeschwindigkeit beinhalten.

5. Scheibenwischvorrichtung (1) nach dem vorhergehenden Anspruch, **dadurch gekennzeichnet, dass** die Steuereinrichtung (3) zur Bestimmung des Parameters der Fahrgeschwindigkeit mit einem in dem Kraftfahrzeug vorgesehenen Tempomat gekoppelt ist.

6. Scheibenwischvorrichtung (1) nach einem der vorhergehenden Ansprüche, **dadurch gekennzeichnet, dass** die Steuereinrichtung (3) mit einem an dem Fahrzeug vorgesehenen Kamerasystem gekoppelt ist, das abhängig von der Fahrzeugposition örtliche Geschwindigkeitsbegrenzungen bestimmt, wobei die Geschwindigkeitsbegrenzung zur Übermittlung des Parameters der Fahrgeschwindigkeit einsetzbar ist.

7. Scheibenwischvorrichtung (1) nach einem der vorhergehenden Ansprüche, **dadurch gekennzeichnet, dass** sie zur Bestimmung der Umgebungsbedingungen und/oder eines Scheibenzustandes des Fahrzeuges mindestens einen Regensensor aufweist.

8. Scheibenwischvorrichtung (1) nach einem der vorhergehenden Ansprüche, **dadurch gekennzeichnet, dass** die Parameter Wischhebelwinkel, die Wischbewegungsrichtung, ein Übersetzungsverhältnis eines Wischhebelgestänges der Scheibenwischvorrichtung und/oder eine Wischergeschwindigkeit berücksichtigen.

9. Scheibenwischvorrichtung (1) nach einem der vorhergehenden Ansprüche, **dadurch gekennzeichnet, dass** die Leistungs- und Drehmomentanpassung eine Wischeraufwärtsbewegung und/oder eine Wischerabwärtsbewegung berücksichtigt, wobei mindestens ein oder mehrere Kennfelder zur Bestimmung des benötigten Leistungs- und Drehmoments von der Steuereinrichtung (3) abrufbar sind.

10. Verfahren zur elektronisch gesteuerten Begrenzung eines Leistungs- und Drehmoments einer Scheibenwischvorrichtung (1), insbesondere für ein Kraftfahrzeug, wobei die Scheibenwischvorrichtung (1) über eine Steuereinrichtung (3) steuerbar ist, welche einen Leistungs- und Drehmomentsbedarf der Scheibenwischvorrichtung (1) in Abhängigkeit von wenigstens einem oder mehreren Parametern auf den Leistungsbedarf der Antriebseinrichtung (2) Einfluss nehmende Parameter steuert, die Schritte umfassend:
- Bestimmen mehrerer Parameter, wobei die Parameter mindestens die aktuelle Position des Fahrzeuges und die Geschwindigkeit des Fahrzeuges umfassen, wobei die Geschwindigkeit des Fahrzeuges insbesondere die maximal zulässige und/oder über einen Tempomat einstellbare Fahrgeschwindigkeit ist und
- Steuern des Leistungs- und Drehmomentbedarfs der Scheibenwischvorrichtung (1) in Abhängigkeit von den jeweiligen Parametern.

11. Verfahren nach dem vorherigen Anspruch, **dadurch gekennzeichnet, dass** als Parameter ein Wischhebelwinkel, eine Wischbewegungsrichtung, ein Übersetzungsverhältnis eines Wischhebelgestänges der Scheibenwischvorrichtung, eine Wischergeschwindigkeit, eine Übersetzung eines Antriebsgestänges, eine Außentemperatur und/oder ein Scheibenzustand berücksichtigt werden.

## Claims

1. Windshield wiping device (1), in particular for a motor vehicle, with at least one drive device (2), which can be controlled via a control device (3), the control device (3) controlling a power and torque requirement of the windshield wiping device (1) depending on at least one or a plurality of parameters influencing the power and torque requirements of the drive device (2), **characterized in that** the control device (3) comprises, in order to reduce the power and torque, at least parameters for determining the present position (6a) and the speed (6b) of the motor vehicle.

2. Windshield wiping device (1) according to Claim 1, **characterized in that** the determination of the position is performed with the aid of satellite signals, in particular a GPS.

3. Windshield wiping device (1) according to Claim 1 or 2, **characterized in that** the control device (3) is coupled to a GPS provided in the motor vehicle, in particular to a navigation system, in order to determine the parameters of the vehicle position.

4. Windshield wiping device (1) according to one of the preceding claims, **characterized in that** the parameters at least contain the maximum permissible travel speed.

5. Windshield wiping device (1) according to the preceding claim, **characterized in that** the control device (3) is coupled to a cruise control system provided in the motor vehicle in order to determine the parameter of travel speed.

6. Windshield wiping device (1) according to one of the preceding claims, **characterized in that** the control device (3) is coupled to a camera system provided on the vehicle, said camera system determining local speed limits depending on the vehicle position, it being possible for the speed limit to be used to communicate the parameter of travel speed.

7. Windshield wiping device (1) according to one of the preceding claims, **characterized in that**, in order to determine the environmental conditions and/or a windshield state of the vehicle, it has at least one rain sensor.

8. Windshield wiping device (1) according to one of the preceding claims, **characterized in that** the parameters take into consideration wiper arm angles, the wiping movement direction, a transmission ratio of a wiper arm rod assembly of the windshield wiping device and/or a wiper speed.

9. Windshield wiping device (1) according to one of the preceding claims, **characterized in that** the power and torque matching takes into consideration an upward wiper movement and/or a downward wiper movement, it being possible for at least one or a plurality of families of characteristics to be called up by the control device (3) in order to determine the required power and torque.

10. Method for electronically controlled limitation of a power and torque of a windshield wiping device (1), in particular for a motor vehicle, it being possible for the windshield wiping device (1) to be controlled via a control device (3), which controls a power and torque requirement of the windshield wiping device (1) depending on at least one or a plurality of parameters having an influence on the power requirement of the drive device (2), said method comprising the following steps:
- determining a plurality of parameters, wherein the parameters include at least the present position of the vehicle and the speed of the vehicle, wherein the speed of the vehicle is in particular the maximum permissible travel speed and/or travel speed which can be set via a cruise control system; and
- controlling the power and torque requirement of the windshield wiping device (1) depending on the respective parameters.

11. Method according to the preceding claim, **characterized in that** a wiper arm angle, a wiping movement direction, a transmission ratio of a wiper arm rod assembly of the windshield wiping device, a wiper speed, a transmission ratio of a drive rod assembly, an external temperature and/or a windshield state are taken into consideration as parameters.

## Revendications

1. Dispositif d'essuie-glace (1), notamment pour un véhicule automobile, avec au moins un dispositif d'entraînement (2) pouvant être commandé via un dispositif de commande (3), le dispositif de commande (3) commandant un besoin de puissance et de couple de rotation du dispositif d'essuie-glace (1) en fonction d'au moins ou plusieurs paramètres influençant le besoin de puissance et de couple de rotation du dispositif d'entraînement (2), **caractérisé en ce que** le dispositif de commande (3) comprend au moins des paramètres de détermination de la position actuelle (6a) et de la vitesse (6b) du véhicule automobile en vue de réduire la puissance et le couple de rotation.

2. Dispositif d'essuie-glace (1) selon la revendication 1, **caractérisé en ce que** la détermination de la position s'effectue à l'aide de signaux de satellite, notamment d'un GPS.

3. Dispositif d'essuie-glace (1) selon la revendication 1 ou 2, **caractérisé en ce que** le dispositif de commande (3) est couplé à un GPS, notamment à un système de navigation, prévu dans le véhicule automobile pour déterminer les paramètres relatifs à la position du véhicule.

4. Dispositif d'essuie-glace (1) selon l'une quelconque des revendications précédentes, **caractérisé en ce que** les paramètres comprennent au moins la vitesse de conduite maximale admise.

5. Dispositif d'essuie-glace (1) selon la revendication précédente, **caractérisé en ce que** le dispositif de commande (3) est couplé à un régulateur de vitesse prévu dans le véhicule automobile pour déterminer le paramètre relatif à la vitesse de conduite.

6. Dispositif d'essuie-glace (1) selon l'une quelconque des revendications précédentes, **caractérisé en ce que** le dispositif de commande (3) est couplé à un système de caméra prévu au niveau du véhicule et définissant les limitations de vitesse locales en fonction de la position du véhicule, la limitation de vitesse pouvant être utilisée pour calculer le paramètre relatif à la vitesse de conduite.

7. Dispositif d'essuie-glace (1) selon l'une quelconque des revendications précédentes, **caractérisé en ce qu'**il comporte au moins un capteur de pluie pour déterminer les conditions environnementales et/ou un état de vitre du véhicule.

8. Dispositif d'essuie-glace (1) selon l'une quelconque des revendications précédentes, **caractérisé en ce que** les paramètres prennent en compte un angle de levier d'essuie-glace, la direction de déplacement d'essuie-glace, un rapport de démultiplication d'une tige de levier d'essuie-glace du dispositif d'essuie-glace et/ou une vitesse d'essuie-glace.

9. Dispositif d'essuie-glace (1) selon l'une quelconque des revendications précédentes, **caractérisé en ce que** l'adaptation de puissance et d'adaptation de couple de rotation d'un mouvement d'essuyage vers l'avant et/ou d'un mouvement d'essuyage vers l'arrière sont pris en compte, au moins une ou plusieurs caractéristiques pouvant être appelées par le dispositif de commande (3) pour déterminer la puissance et le couple de rotation nécessaires.

10. Procédé de limitation à commande électronique d'une puissance et d'un couple de rotation d'un dispositif d'essuie-glace (1), notamment pour un véhicule automobile, le dispositif d'essuie-glace (1) pouvant être commandé via un dispositif de commande (3) commandant un besoin de puissance et de couple de rotation du dispositif d'essuie-glace (1) en fonction d'au moins un ou plusieurs paramètres parmi les paramètres influençant le besoin de puissance du dispositif d'entraînement (2), comprenant les étapes suivantes :
- détermination de plusieurs paramètres, les paramètres comprenant au moins la position actuelle du véhicule et la vitesse du véhicule, la vitesse du véhicule étant notamment la vitesse de conduite maximale autorisée et/ou réglable via un régulateur de vitesse ; et
- commande du besoin de puissance et de couple de rotation du dispositif d'essuie-glace (1) en fonction des paramètres respectifs.

11. Procédé selon la revendication précédente, **caractérisé en ce que** les paramètres prennent en compte un angle de levier d'essuie-glace, la direction de déplacement d'essuie-glace, un rapport de démultiplication d'une tige de levier d'essuie-glace du dispositif d'essuie-glace et/ou une vitesse d'essuie-glace, une démultiplication d'une tige d'entraînement, une température extérieure et/ou un état de vitre.
